# EUROPEAN PATENT SPECIFICATION

(11) **EP 2 345 266 B1**
(45) Date of publication and mention of the grant of the patent: **04.05.2016**
(21) Application number: 08800423.9
(22) Date of filing: 03.10.2008
(51) Int. Cl.: H04W 8/02, H04W 24/00, H04W 4/14, H04W 88/02, H04L 12/14, H04M 15/00, H04M 17/00, H04W 4/24

(54) **SYSTEM AND METHOD FOR MAINTAINING AND UPDATING DATA OBJECTS ASSOCIATED WITH MOBILE ELECTRONIC DEVICES**
SYSTEM UND VERFAHREN ZUM UNTERHALTEN UND AKTUALISIEREN VON MIT MOBILEN ELEKTRONISCHEN GERÄTEN ASSOZIIERTEN DATENOBJEKTEN
SYSTÈME ET PROCÉDÉ DE CONSERVATION ET DE MISE À JOUR D'OBJETS DE DONNÉES ASSOCIÉS À DES DISPOSITIFS ÉLECTRONIQUES MOBILES

(43) Date of publication of application: 20.07.2011
(73) Proprietor: Redknee Inc., Mississauga, ON L4W 4Y9 (CA)
(72) Inventor: WONG, Vincent Chi Chiu, L4W 4Y9-Mississauga-Ontario (CA); NAZARALI, Shaffin, Markham Ontario L6E 1V3 (CA); KUMAR, Vinay, Brampton Ontario L6R 1G3 (CA)
(74) Representative: ABG Patentes, S.L.
(86) International application number: PCT/CA2008/001759
(87) International publication number: WO 2010/037203

(56) References cited:
- EP-A1- 1 850 575
- EP-A2- 1 594 034
- US-A1- 2001 013 024
- US-A1- 2004 209 595
- US-A1- 2005 027 830
- US-A1- 2005 172 154
- US-A1- 2007 288 386
- US-A1- 2008 139 111
- US-B2- 7 280 816
- US-B2- 7 321 656

## Description

### FIELD

The present specification relates generally to communication networks and more particularly relates to a system and method for maintaining and updating data objects associated with mobile electronic devices.

### BACKGROUND

It is known for telecommunication infrastructure to maintain data objects associated with mobile electronic devices that are provisioned to communicate via that telecommunication infrastructure. Each data object for each device is typically, though not always, maintained in relative isolation to the other data objects for the other devices. In one context it is known to link data objects for a pool of devices that have a relation to each other, so that the devices in the pool can be administered together for purposes of tracking and allocating a block of air-time (or other usage parameter) that is to be split between each device in the pool, so as to track an aggregate usage for the pool of devices. However, there are further technical efficiencies and improvements to be gained in the maintenance and updating of these data objects.

Document US 2007/0288386 A1 describes a management apparatus including a registering unit configured to issue a first key corresponding to a first service in response to a request for registration with the first service from a first information processing apparatus; a storage unit configured to store an apparatus ID of the first information processing apparatus, the first key, and a second key corresponding to a second service while associating the apparatus ID, the first key, and the second key with each other; and a composite license issuing unit configured to issue a composite license including a first license and a second license, the first license including first encrypted data, which is a content key that is used to decrypt the encrypted content and that is encrypted with the first key, and the second license including second encrypted data, which is the content key that is encrypted with the second key.

Document US 2005/0172154 A1 describes systems and methods for providing digital content to wireless network enabled devices. In another aspect, the invention is directed to providing custom caller alerts to mobile telephones or other network appliances configured or repurposed for receiving such alerts or digital content.

Document US 2001/0013024 A1 describes an inventory information collecting unit automatically collecting inventory information including inventory information regarding software installed in each of a plurality of computers within an organization. A usage-state information collecting unit updates a software license usage number which represents the number of software licenses used in each section of the organization. When the sum of the software license usage numbers of the respective sections of the organization exceeds a software license holding number which represents the number of software licenses owned by the organization, a license purchasing unit generates a purchase transaction for purchasing software licenses, the number of which is equal to the difference between the sum and the software license holding number and transfers a purchase expense to relevant sections.

Document EP 1 594 034 A2 describes a chain of licenses in which each license includes an "uplink" identifier pointing to the next license in the chain. A request to render encrypted content is received and a chain of licenses corresponding to the content is located. The chain includes a leaf license linked to the content at one end of the chain, a root license at the other end of the chain, and any intermediate licenses therebetween.

### SUMMARY

An aspect of the specification provides a method for updating data objects associated with electronic devices comprising:
receiving instructions to adjust a first data object; said first data object maintained an association with a first electronic device; said first data object comprising a reference to a second data object associated with a second electronic device; said first data object further comprising at least one usage metric associated with said first electronic device; said instructions comprising an adjustment to said at least one usage metric;
accessing said first data object;
performing a first adjustment to said at least one usage metric in said first data object in accordance with said instructions;
accessing said second data object identified within said first data object; said second data object further comprising at least one usage metric associated with said second electronic device;
performing a second adjustment to at least one usage metric associated with said second data object; said second adjustment based on said first adjustment.

The at least one usage metric associated with said first electronic device or the at least one usage metric associated with said second electronic device can be a usage limit. The second adjustment can be an increase to the usage limit associated with said second data object. The increase can be based on a percentage of an increase to said usage limit associated with said first adjustment.

The at least one usage metric associated with said first electronic device or said at least one usage metric associated with said second electronic device can be an actual usage.

The second adjustment can be a decrease to said actual usage associated with said second data object.

The decrease can be based on a percentage of an increase to said actual usage associated with said first adjustment.

The at least one usage metric associated with said first electronic device or said at least one usage metric associated with said first electronic device can be associated with a particular service that is available from either said first electronic device or said second electronic device. The service can comprises at least one of voice, messaging and data services. The data service can comprise one or more of web browsing, emails, streaming audio or video media, SMS messages, multi-media messages, or chat service. The units for the usage metric can be expressed in terms of one or more of minutes, seconds, currency, bytes, data sessions, data blocks, or the like. The data blocks or data sessions can comprise a song, a ring tone, or movie, or some other multi-media event or service.

The first data object can be associated with said first electronic device by means of an absolute identifier. The second data object can also be associated with said second data object by means of an absolute identifier. The absolute identifier can be a International Mobile Equipment Identity (IMEI).

The first data object can be associated with said first electronic device by means of a relative identifier. The second data object can also be associated with said second data object by means of a relative identifier. The relative identifier can be at least one of an International Mobile Subscriber Identity (IMSI) and Mobile Systems International Subscriber Identity Number (MSISDN).

Another aspect of the specification comprises a data object management engine for updating data objects associated with electronic devices comprising a processor configured to receive instructions to adjust a first data object. The first data object is maintained in a data server connected to said processor. The first data object is associated with a first electronic device. The first data object comprises a reference to a second data object associated with a second electronic device. The first data object is maintained in said data server. The first data object further comprises at least one usage metric associated with said first electronic device. The instructions comprise an adjustment to said at least one usage metric. The processor is further configured to access said first data object and to perform a first adjustment to said at least one usage metric in said first data object in accordance with said instructions. The processor is further configured to access the second data object identified within said first data object. The second data object further comprises at least one usage metric associated with said second electronic device. The processor is further configured to perform a second adjustment to at least one usage metric associated with said second data object, the second adjustment being based on said first adjustment.

### BRIEF DESCRIPTION OF THE DRAWINGS

Figure 1 shows a schematic representation of a system for maintaining and updating data objects associated with mobile electronic devices.
Figure 2 shows a schematic representation of the data object manager engine of Figure 1.
Figure 3 shows an example structure and contents of data objects maintained in the system of Figure 1.
Figure 4 shows a flow-chart depicting a method of maintaining and updating data objects associated with electronic devices.
Figure 5 shows further exemplary structure and contents of data objects maintained in the system of Figure 1 in conjunction with the method of Figure 4.
Figure 6 shows a flow-chart depicting another method of maintaining and updating data objects associated with electronic devices.
Figure 7 shows further exemplary structure and contents of data objects maintained in the system of Figure 1 in conjunction with the method of Figure 4.
Figure 8 shows further exemplary structure and contents of data objects maintained in the system of Figure 1 in conjunction with the method of Figure 4.
Figure 9 shows further exemplary structure and contents of data objects maintained in the system of Figure 1 in conjunction with the method of Figure 4.
Figure 10 shows another exemplary structure and contents of an enhanced data object that can be maintained in the system of Figure 1.

### DETAILED DESCRIPTION OF THE EMBODIMENTS

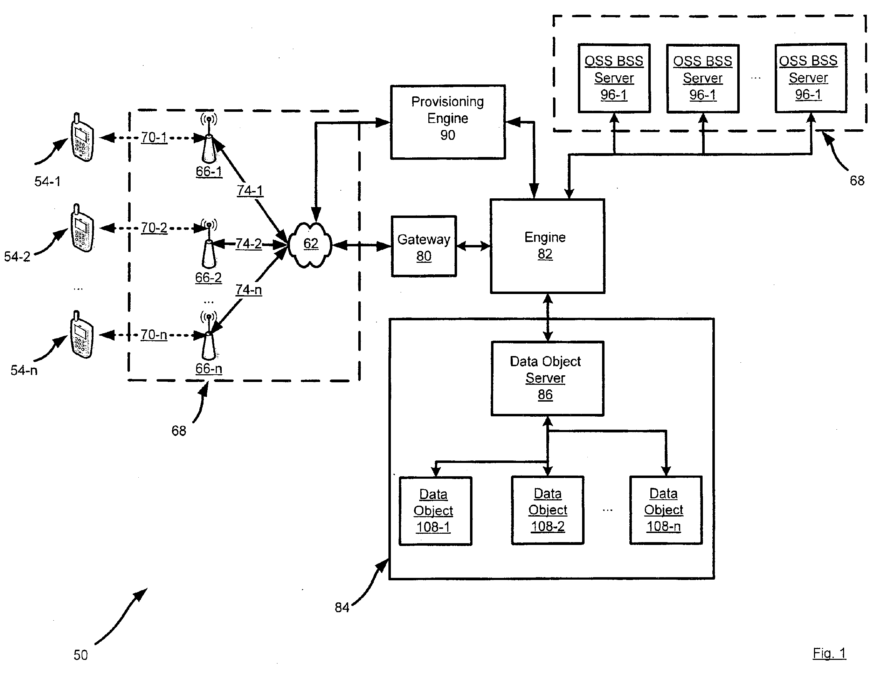

Referring now to Figure 1, a system for maintaining and updating data objects associated with mobile electronic devices is indicated generally at 50. System 50 comprises a plurality of electronic devices 54-1, 54-2 ... 54-n (generically, electronic device 54, and collectively, electronic devices 54. This nomenclature is used elsewhere herein) that are connectable to a core network 62 via a one or more respective base stations 66-1, 66-2, ... 66-n (generically, base station 66, and collectively, base stations 66. This nomenclature is used elsewhere herein). In a present embodiment each electronic device 54 is mobile and is configured to employ a wireless link 70 between each respective electronic device 54 and each base station 66-1, 66-2 and 66-n, specifically as shown in Figure 1 or according to any other connections based on the location and structure of a particular base station 66 and device 54. Any known appropriate backhaul links 74-1, 74-2, 74-n can be used between base station 66 and core network 62. Collectively, links 70, base stations 66 and backhauls 74 comprise a mobile network 68.

Core network 62 generally comprises network infrastructure (including gateways) that is compatible with the protocols supported by base stations 66 and links 74, and can, if desired, additionally support other protocols such as those normally supported by the public switched telephone network (PSTN), the Internet, and/or any other types of circuit or packet switched networks.

A data object manager engine 82 is connected to core network 62 by one or more appropriate gateways 80. Data object manager engine 82 also connects to a data object server 86, which can be directly incorporated into data object manager engine 82 or can be a stand-alone server. Data object server 86 is configured to maintain and update a plurality of data objects 108-1, 108-2 ... 108-n, which are respective to each device 54-1, 54-2 ... 54-n. Data objects 108 can be implemented using any now-known, future-conceived or otherwise desirable data structures, including data records, data files, eXtended Markup Language (XML) files etc.

Core network 62 also includes business support systems and operational support systems that are complementary to the management, rating, billing, operations, maintenance, and provisioning of services provided to subscriber S via electronic device 54, base stations 66, and links 74. Such business support system (BSS) and operational support systems (OSS) are discussed further below as OSS BSS servers 96. Collectively, links 70, base stations 66, and backhaul links 74, and core network 62 comprise a mobile network 68. The hashed-boxes in Figure 1 labelled with reference character 68 represent that the components within those hashed-boxes are all components within mobile network 68.

Engine 82 also connects to one or more OSS BSS servers 96-1, 96-2, ... 96-n (generically, OSS BSS server 96, and collectively, OSS BSS servers 96). OSS BSS server 96 can be based on a service control point (SCP) or the like in the prepaid context, or it can be based on a billing server utilizing customer detail records (CDR), or the like in the post-paid context, or OSS BSS server 96 can be based on combinations or enhancements thereof. In general, OSS BSS 96 are configured to maintain and process rating, billing, and usage information relative to subscriber S or device 54. Engine 82 can connect to OSS BSS servers 96 directly via a number of interfaces and protocols including application programming interfaces (API's) or the receipt of event records (e.g. call detail records) in a manner that is native to each of those servers, so that no modification to those OSS BSS servers is required.

System 50 also comprises a provisioning engine 90 which can be based on known or future-conceived automated or manual provisioning technologies. Provisioning engine 90 is thus configured to undertake steps to actually provision each device 54 for operation on network 68. Such provisioning includes obtaining absolute identifiers such as International Mobile Equipment Identity (IMEI) for each device 54, and associating or assigning relative identifiers such as an International Mobile Subscriber Identity (IMSI) or a Mobile Systems International Subscriber Identity Number (MSISDN) to each device 54. Such provisioning can also include establishing usage limits and the like, as discussed further below in relation to object 108.

If desired, data object server 86 can be implemented as part of a profile server 84 (or in a generic sense, a data server). Thus, in addition to, or as part of objects 108, such a profile server 84 can contain other device 54 data (e.g. subscriber associations, language preferences, subscribed features or applications, capabilities and features of the device 54), usage data (e.g. usage records pertaining to services used by the subscriber S or device 54), or contextual data (e.g. state of the subscriber in a given application (e.g. current progress information in a given game, location information in various geodetic formats, generic presence and state information (e.g. on-line, off-line, available, busy, donot-disturb, happy, sad). Those skilled in the art will understand that a subset of the information contained in profile server 84 can be applicable to or directly linked to the information contained in a profile, respective to each data object 108 and each device 54. Engine 82 can access and modify data respective to each device 54 (including data respective to a subscriber associated with each device) that is resident in profile server 84 in order to correct or modify the provisioned state of a given device 54 (including a state respective to a subscriber associated with each device 54) via a variety of protocols and interfaces including lightweight directory access protocol (LDAP) as well as application programming interfaces (APIs) based on based on Common Object Request Broker Architecture (CORBA) or Simple Object Access Protocol/Extensible Markup Language (SOAP/XML).

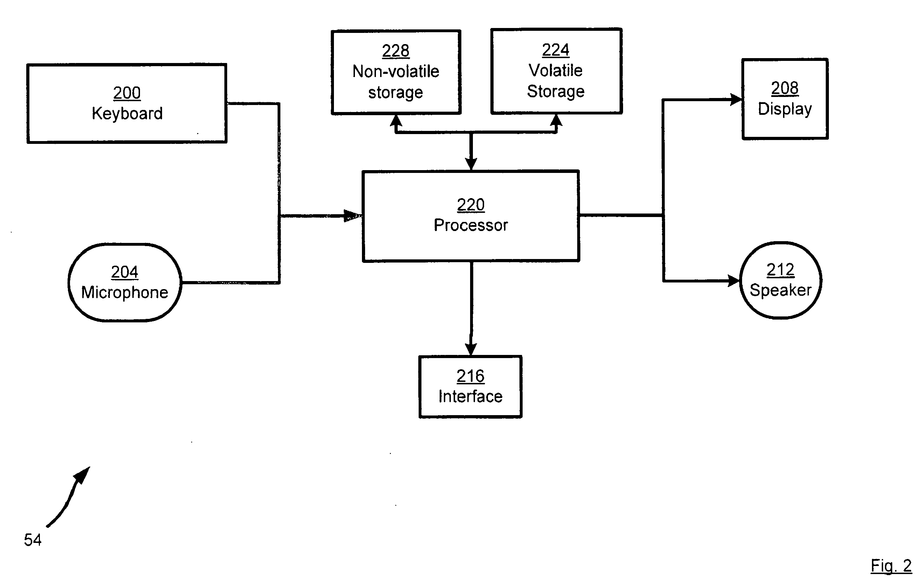

Referring briefly to Figure 2, an exemplary structure for engine 82 is shown in greater detail. Engine 82 in a present embodiment is based on the computing environment of a computing server. Engine 82 thus includes a hardware configuration that comprises one or more input devices in the form of a keyboard 200, microphone 204 and the like; and one or more output devices in the form of a display 208, a speaker 212 and the like.

Engine 82 also includes at least one interface 216, which can be used to connect to gateway(s) 82 and a data object server 86. The foregoing components are interconnected by a microcomputer comprised of one or more central processing units 220 connected to volatile memory 224 (e.g. random access memory) and non-volatile memory 228 (e.g. FLASH memory).

While not shown herein, it will understood by those skilled in the art that each electronic device 54 in Figure 1 includes its own computing environment consisting of a microcomputer connected to various input and output devices, and can be based on any type of mobile computing device such as cellular telephone, a wireless personal digital assistant, or the like. In other embodiments, electronic device 54 can include the computing environment of a desktop computer, a workstation, a thin-client or the like, that is configured to utilize network 68 includes a hardware configuration that may comprise one or more input devices in the form of a keyboard, a mouse and the like; one more output devices in the form of a display, and the like; and a network interface for conducting network communications; all of which are interconnected by a microcomputer comprised of one or more central processing units that itself is connected to volatile memory and non-volatile memory. Thus, the computing environment shown in Figure 2 presents a schematically analogous environment to the computing environment of each device 54.

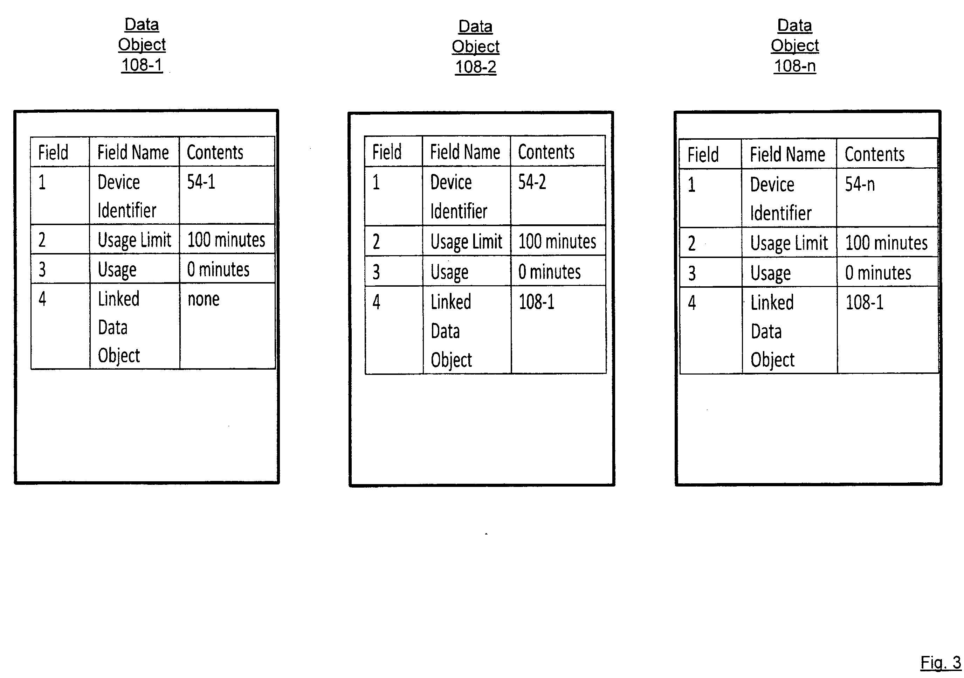

Referring now to Figure 3, an exemplary structure and contents for each data object 108 is shown. In a present embodiment, each data object 108 includes a number of fields which are each provided with a number. Field 1 of each data object 108 includes a device identifier. Thus, field 1 of data object 108-1 includes device identifier 54-1, thereby indicating that data object 108-1 is respective to device 54-1. Likewise, field 1 of data object 108-2 includes device identifier 54-2, thereby indicating that data object 108-2 is respective to device 54-2. Likewise, field 3 of data object 108-n includes device identifier 54-n, thereby indicating that data object 108-n is respective to device 54-n. It should be understood that in variations of the embodiments shown herein, that each data object 108 can have multiple device identifier fields where more than one device 54 so that each data object 108 is associated with multiple devices. Typically, however, each object 108 would includes a unique list of device identifiers, and device identifiers would not overlap between objects 108. Such device identifiers can be dynamically changeable, using appropriate/desired provisioning methodologies. The device identifier can be any unique identifier for a given device, for example, an absolute identifier such as an International Mobile Equipment Identity (IMEI) or it can be a relative identifier for one or more devices such as an International Mobile Subscriber Identity (IMSI) or a Mobile Systems International Subscriber Identity Number (MSISDN).

Field 2 of each data object 108 includes a usage limit. Such a usage limit can be a metric applied to any of the services that are available from a given device 54. Also, each data object 108 can include a plurality of usage limits respective to each service for a given device 54. In a present embodiment, the usage limit relates to voice services, indicating a maximum number of minutes that are available for use by a particular device 54. While not shown herein, using known provisioning and prepaid or postpaid billing techniques, the usage limit can be adjusted. Such adjustment can involve the increasing or decreasing of the usage limit as particular criteria are satisfied. The particular units for a given usage limit is also not particularly limited, and can be expressed in terms of, for example, minutes, seconds, currency, bytes, data sessions, data blocks, or the like. Data blocks or sessions can also encompass, for example, an entire song, ring tone or movie that may have a variable length in actual data size. Data blocks or sessions can also be associated with other multi-media services or services with concurrent and/or asynchronous events that each have a variable length in actual data size. Other services can include data services, which in turn can be specifically defined to include web browsing, emails, streaming media downloads, SMS messages, multi-media message service messages, chat services.

Field 3 of each data object 108 includes a usage meter. Such a usage meter corresponds to the usage limit of Field 2, and indicates how much of the limit of Field 3 has been used. It will now be understood that a plurality of usage meters can correspond to any plurality of usage limit fields that are provided in a given data object 108. The units for a given usage meter will typically correspond to the units for the given usage limit. The contents of field 3 can be increased as the respective device 54 actually uses the particular service, either in real-time or during a post-processing technique. Likewise, the contents of field 3 can be reset or decreased as certain criteria are satisfied for performing such reset or decreasing, again either in real-time or during a post-processing technique.

Fields 2 and 3 are generically referred to herein as containing usage metrics.

Fields 4 of each data object 108 indicates a linked data object. In a present embodiment, only one linked data object Is provided for each data object 108, but in other embodiments a plurality of linked data objects can be included in each data object 108. In a present embodiment, data object 108-1 has no linked data object in Field 4; data object 108-2 refers to data object 108-1 in Field 4, while data object 108-n also refers to object 108-1 in Field 4.

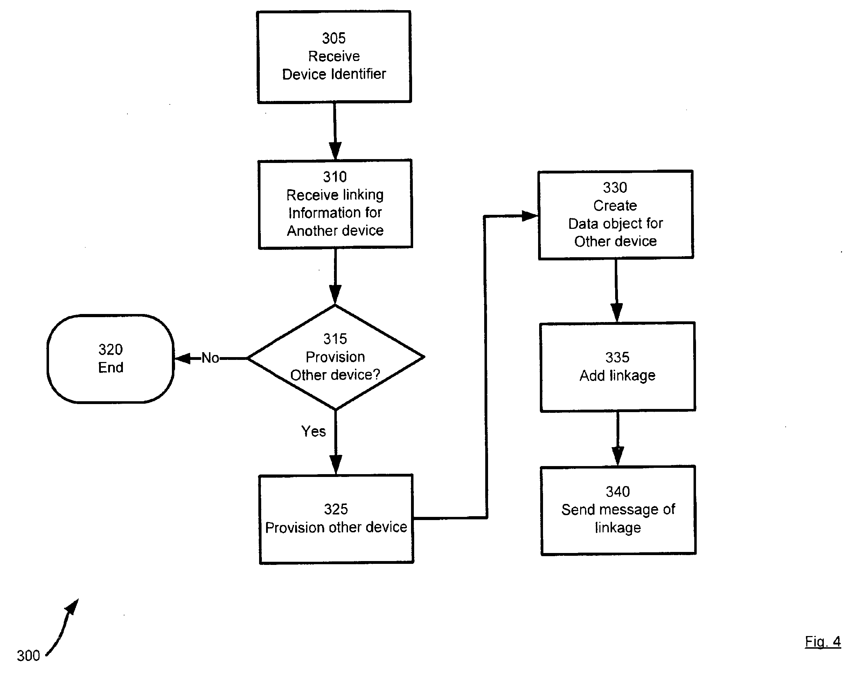

The means by which field 4 of each data object is populated and, if needed, updated, is not particularly limited. One example of how field 4 can be populated is shown in Figure 4. Referring now to Figure 4, a flowchart depicting a method for identifying a linked device is indicated generally at 300. Method 300 can be implemented using system 50, or a variant thereof.

To assist with understanding method 300, it will be discussed according to a possible implementation of method 300 using system 50. To further assist with understanding method 300, the following assumptions will be made about system 50. It will be assumed that:
a) device 54-1 is already provisioned in network 68, and therefore data object 108-1 in Figure 3 already exists in profile server 84;
b) device 54-2 has not been provisioned in network 68, and therefore data object 108-2 in Figure 3 does NOT yet exist (or that it is empty) in profile server 84; and.
c) device 54-n has not been provisioned in network 68 and therefore data object 108-n in Figure 3 does NOT yet exist (or that it is empty) in profile server 84.

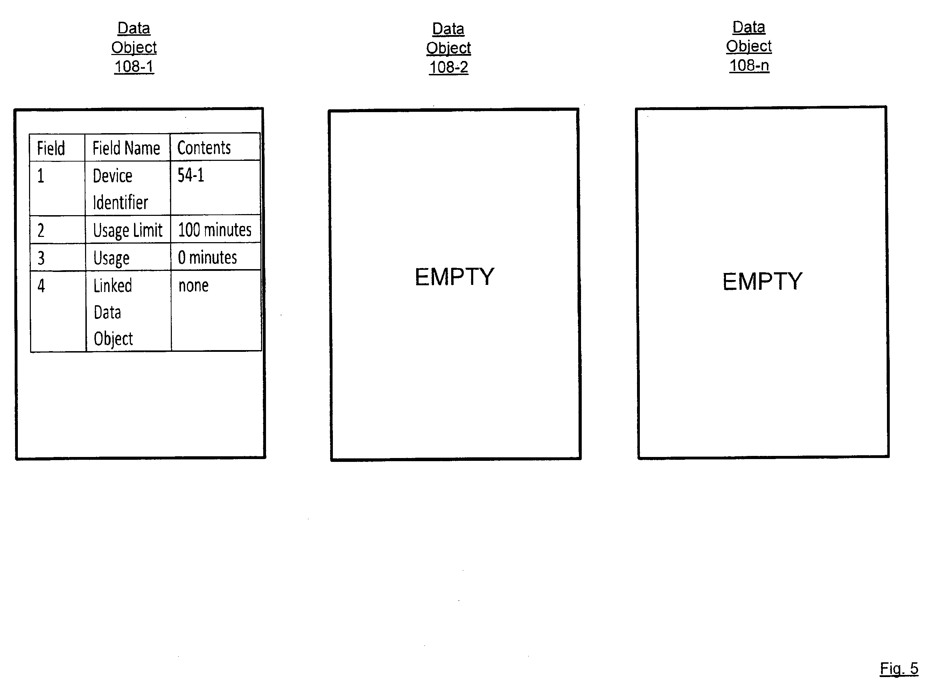

Figure 5 shows data objects 108 as they are stored in profile server 84 in accordance with the above example.

Referring again to Figure 4, block 305 comprises receiving a device identifier. In the present example, the device identifier is respective to device 54-1. The device identifier received at block 305 can, in certain embodiments, be received by engine 82 via gateway 80 and network 68. In certain embodiments, the device identifier received at block 305 can be received by engine 82 via OSS BSS servers 96 (for example, upon the activation or provisioning of a device within the OSS or BSS systems of mobile network 68.) In certain embodiments, the device identifier received at block 305 can be received by engine via provisioning engine 90 (for example, upon the activation or provisioning of a device within mobile network 68). Block 310 comprises receiving linking information for another device other than the device associated with the device identifier from block 305. The linking information can be also be received by engine 82 via gateway 80 and network 68. One way of implementing blocks 305 and blocks 310 is for a message to be created at device 54-1 that identifies another device 54 within that message. The message format can be, for example, a short message service (SMS) message, an Unstructured Supplementary Service Data (USSD) message, a multimedia message service (MMS) message, an e-mail message. Those skilled in the art will recognize that gateway 80 may interface to messaging elements within the core network 62 (e.g. a short message service center (SMSC), a multimedia message service center (MMSC), a USSD Gateway, or an e-mail server.) The gateway 80 can be configured to include appropriate interfaces and protocol converters to communicate with network elements in core network 62 in a manner that is native to each of those network elements, so that no modification to those network elements is required. Those skilled in the art will also recognize that gateway 80 may contain functionality that emulates or otherwise incorporates the functionality of messaging elements within core network 62. Other means of generating such a message at device 54-1 include Dual Tone Multi-Frequency (DTMF) via an Interactive Voice Response (IVR) system hosted by gateway 82. Thus, the originating identifier of the message (i.e. device 54-1) can satisfy block 305, while the contents of the message can satisfy block 310. Another means of generating such a message at device 54-1 Is where another device 54 is identified via a web based service (which may be hosted by gateway 82). For example, the identifier of device 54 can be determined the selection of a Uniform Resource Locator (URL) link or by explicitly populating the identifier of another device 54 in an appropriate field).

Note that the contents of the message for satisfying block 310 can be either in absolute form (i.e. an explicit unambiguous reference to the IMEI or equivalent for the device 54) or a relative identifier that can be related to device 54, such as an IMSI or MSISDN or the like. It should be understood that blocks 305 and 310 can be effected in other ways as well. For example, via a web browser interface from any device or client that is connectable to engine 82.

Block 315 comprises a determination as to whether or not to provision the device identified at block 310. As part of block 315, typically additional provisioning information will also be received (the reception of which is not shown in method 300 as it is optional) which is used in the determination and actual provisioning of the device identified at block 310. The determination can be based on any usual (or otherwise desired) criteria that is used when determining whether or not to provision a particular device on a given network. Such criteria can therefore include, obtaining a specific request to provision the device and information that reflects a profile for that device. Such other information can include, for example, the usage limit referenced in Field 2 of the data objects 108 shown in Figure 3. Such information can also include the various types of services which are to be provisioned for a given device 54. Other provisioning information will now occur to those skilled in the art.

The determination at block 315 can be "no", for example, if sufficient identifying information is not provided, or if for some particular reason the information indicates that a particular device is not eligible for provisioning. In this case, method 300 ends.

If the determination at block 315 is "yes" then block 325 comprises the actual provisioning of the device referenced at block 310 in accordance with the provisioning criteria used at block 315. Thus, assuming the device identified at block 310 is device 54-2, then device 54-2 is actually activated on network 68 so that device 54-2 can now access network 68 in the usual manner. Block 330 comprises creating a data object for the device identified at block 310. Block 335 comprises adding a linkage in the data object created at block 330 to the device identified at block 305. Block 330, in a present example, can comprise the creation of Fields 1-3 of data object 108-2, while block 335 can comprise the creation of Field 4 in data object 108-2. Note that in this example, the identification of device 54-1 is made indirectly, via an identification of data object 108-1 which in turn points to device 54-1.

Block 340, which is optional, comprises sending a message of the linkage. Such a message can be sent to either or both of the devices identified in block 305 and block 310. Such a message can be sent via any medium which can be received on the relevant device 54.

Those skilled in the art will recognize that method 300 can be modified to remove linkages between devices and data objects. For example in the case that a device is deprovisioned from the network 68 or where a given attribute associated with a device is removed or reduced in connection with the deactivation of a service or feature. In a modified embodiment of method 300, block 310 would be modified to receive de-linking information for another device other than the device associated with the device identifier from block 305. At a modified embodiment of block 305, if sufficient identifying information is not provided, or if for some particular reason the information indicates that a particular device is not eligible for de-provisioning, then in this case, the modified embodiment of method 300 ends. If the determination at block 315 is "yes" (sufficient de-linking or deprovisioning information is received) then a modified embodiment of block 325 comprises the actual de-provisioning of the device referenced at a modified embodiment of block 310 in accordance with the de-provisioning criteria used at a modified embodiment of block 315. A modified embodiment of block 330 comprises optionally removing a data object for the device identified at the modified embodiment of block 310. A modified embodiment of block 335, comprises the removal of linkages in a previously created data object to the device identified at block modified 305. A modified embodiment of block 330, in a present example, can comprise the removal of Fields 1-3 of data object 108-2, while a modified embodiment of block 335 can comprise the removal of Field 4 in data object 108-2. Note that in this example, the identification of device 54-1 is made indirectly, via an identification of data object 108-1 which in turn points to device 54-1. A modified embodiment of block 340, which is optional, comprises sending a message of the removal of the linkage. Such a message can be sent to either or both of the devices identified in the modified embodiments of block 305 and block 310. Such a message can be sent via any medium which can be received on the relevant device 54.

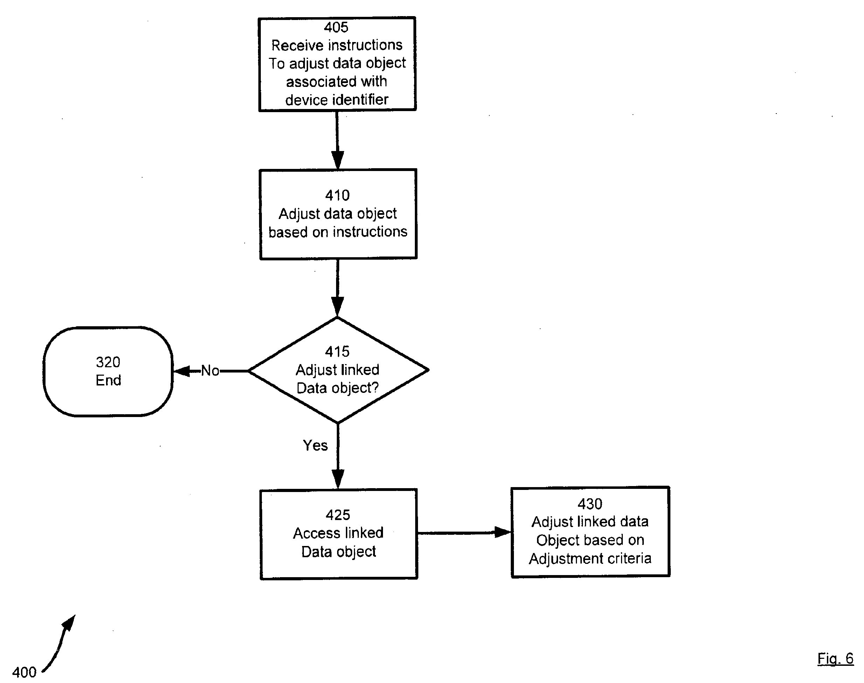

Referring now to Figure 6, a flowchart depicting a method for updating a data record associated with an electronic device is indicated generally at 400. Method 400 can be implemented using system 50, or a variant thereof. Method 400 is typically performed subsequent to, or as part of performance of method 300. Method 400 is typically performed by engine 82 interacting with the other components of system 50 as the context requires.

For example, block 405 comprises receiving instructions to adjust a data object associated with a device identifier. Thus, for example, block 335 comprises the step of adding a linkage to the data object created at block 330. The invocation of block 335 can satisfy the receipt of instructions contemplated at block 405. As another example, OSS BSS servers 96 can provide usage data (e.g. in connection with a voice, messaging, or data based service or application) with respect to device 54. The receipt of usage information in connection of a device 54 from OSS BSS servers 96 can satisfy the receipt of instructions contemplated at block 405. As another example, provisioning engine 90 can provide incremental provisioning data (e.g. the activation of a feature or service (e.g. activation of voice mail, MMS messaging, a mobile TV package), the invocation of a price plan or bundle of services (the selection of voice and messaging plan with a greater allocation of voice minutes and sms messages per month), the activation of a rate plan for one for more services (e.g. the activation of a data rate plan of 1GB per day for $1)), The receipt of incremental provisioning data in connection of a device 54 from provisioning engine 90 can satisfy the receipt of instructions contemplated at block 405. Those skilled in the art will recognize that the instructions to adjust a data object associated with a device identifier can be negative in value as well as positive (for example in the case that a given attribute associated with device is removed or reduced in connection with the deactivation of a service or feature).

Block 410 comprises adjusting the data object referenced at block 405 based on the instructions received at block 405. Thus, in accordance with the current example, assume that block 335 is being performed in relation to data object 108-2. Thus, at block 410 data object 108-2 is updated in accordance with the previously-described performance of block 335.

Block 415 comprises determining whether to adjust the linked data object referenced in data object identified at block 405. Recall in the present example data object 108-2 was referenced at block 405, and therefore the determination at block 415 involves determining whether or not to adjust data object 108-1, which is the data object referenced in field 4 of data object 108-2.

The determination as block 415 can be based on any predefined criteria. Such criteria can be based on, for example, the modification of any of the fields 2-4 in the relevant data object 108. For example, the actual populating of field 4 itself, or the incrementing the usage limit in field 2, or the incrementing of the usage in field 3 can be collective or individual criteria that is used to satisfy the arrival at a "yes" determination at block 415. Conversely, the decrementing of the usage limit data in field 2 of data object 108-2, or the decrementing of the usage amount in field 3 can be criteria that is used to satisfy the arrival at a "no" determination at block 415. Despite these specific examples, it should be understood that the criteria at block 415 is not particularly limited and can be structured to correspond with the varying structures of the data objects that may be referenced at block 405.

In the present example, assume that the actual populating of field 4 of data object 108-2 is sufficient in and of itself to generate a "yes" determination at block 415, then the method 400 will advance to block 425. At block 425 the linked data object is accessed. In this example, engine 82 will access data object 108-1, since it is data object 108-1 that is referenced In field 4 of data object 108-2.

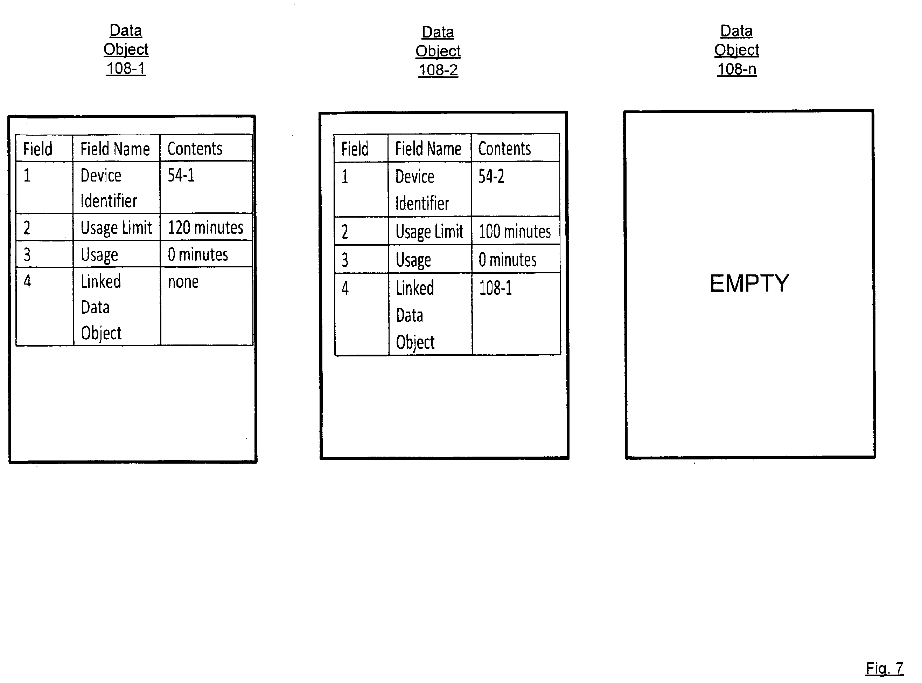

At block 430, the linked data object is adjusted based on predefined adjustment criteria. Any desired adjustment criteria can be used. For example, the adjustment criteria can involve incrementing the usage limit in field 2 of data object 108-1 by a predefined amount. An exemplary predefined amount is the addition of 20 minutes to the usage limit currently maintained in field 2 of data object 108-1. To provide further illustration of this example, Figure 7 shows an example of the status of data objects 108-1 and 108-2 subsequent to the performance of methods 300 and 400, based on the earlier assumption that data objects 108 had the status shown in Figure 5 prior to the performance of methods 300 and 400. Note that in Figure 7, in field 2 of data object 108-1, the usage limit has been increased to 120 minutes, and that data object 108-2 has now been created. Those skilled in the art will recognize that in the event that an attribute in a linked data object is reduced (e.g. the number of minutes are reduced by 100 minutes), then in field 2 of data object 108-1, the usage limit would correspondingly be decreased to 80 minutes.

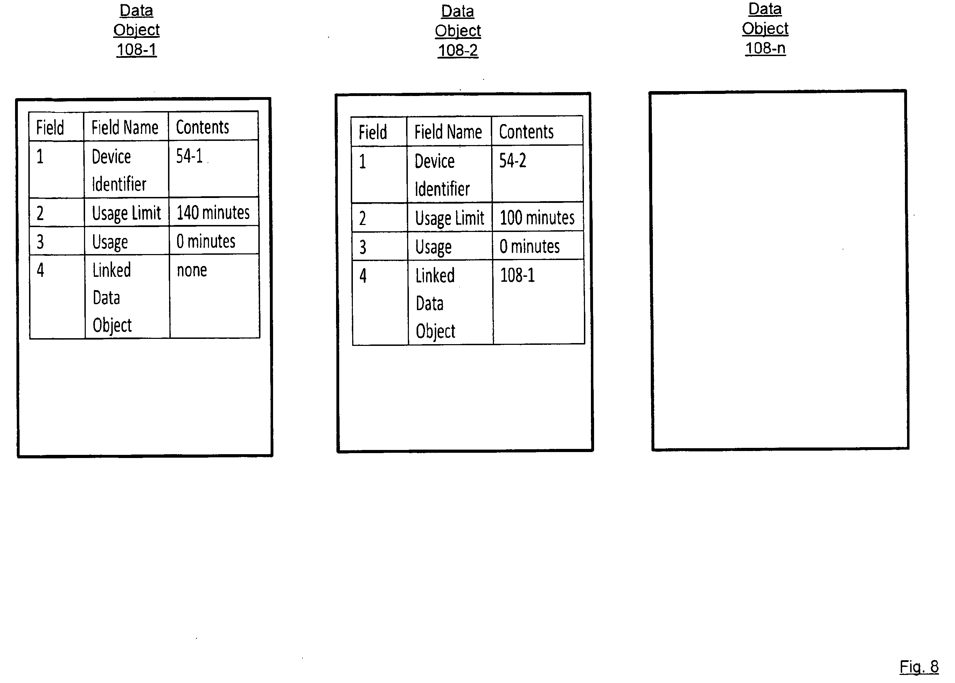

It should now be understood that methods 300 and 400 can be repeated again for the provisioning of device 54-n and which involves the linkage of device 54-n to device 54-1. Figure 8 shows the results of performing method 300 and 400 this second time, and accordingly field 2 of data object 108-1 has been increased to 140 minutes, and that data object 108-n has now been created.

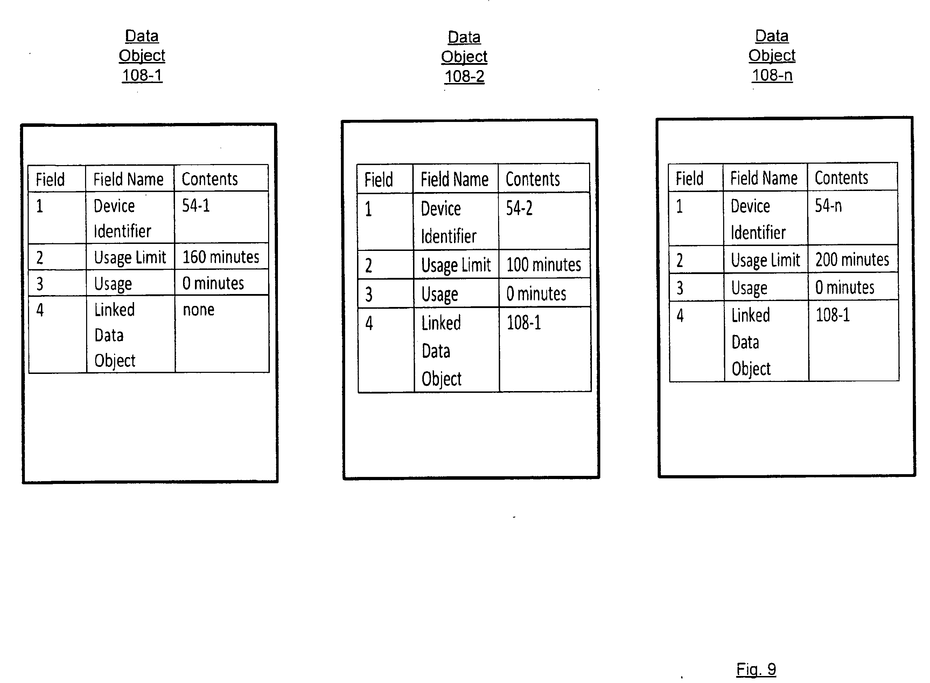

As previously indicated, the performance of method 400 need not be linked to the performance of method 300. For example, assume that data objects 108 are structured and contain the data in accordance with that shown in Figure 8. Assume also that during performance of method 400, at block 405 instructions are received at engine 82 to increase the usage limit in field 2 of data object 108-n to 200 minutes from 100 minutes. Thus, at block 410, field 2 of data object 108-n can actually be increased to 200 minutes. At block 415, assume that a "yes" determination is made if the instructions at block 405 involve the increase of field 2 of data object 108-n. At block 425, data object 108-1 is accessed by engine 82 and at block 430, data object 108-1 is adjusted based on adjustment criteria. Assume, in this example, that the adjustment criteria is to increase field 2 of data object 108-n by ten percent of the amount that field 2 of data object 108-n was adjusted, then as a result of block 430 field 2 of data object 108-1 will be increased by an additional 20 minutes. Figure 9 shows the state of data objects 108 after performance of method 400 in accordance with this example, assuming that Figure 8 reflects the state of data objects 108 prior to this exemplary performance of method 400. In Figure 9, field 2 of data object 108-1 has been increased an additional 20 minutes to a total of 160 minutes (reflecting performance of block 430), while field 2 of data object 108-n has been increased to 200 minutes from 100 minutes.

It is to be reemphasized that the structure and contents of data objects 108 in Figures 3, 5, 7, 8 and 9 are exemplary for the purposes of explanation. Variations of structures for data objects 108 are contemplated, and the contents of those data objects 108 will accord with the actual performance of system 50 in actual operation. Likewise it will be understood thai the various components in system 50, and the various implementations of methods 300 and 400 can also vary.

As an example of a variation, it can be desired to configure engine 82 so that the usage limit in field 2 of a first data object 108 identified in field 4 of a second data object 108 is increased based on an increase in the usage indicated in field 3 of the second data object 108. As another example of a vacation, it can be desired to configure engine 82 so that the usage in field 3 of a first data object 103 identified in field 4 of a second data object is decreased based on an increase in the usage indicated in field 3 of the second data object 108 or an increase in the usage limit in field 2 of the second data object 108.

In more general terms, the amount of the adjustment to the usage metric (e.g. an increase the usage limit in field 2 and/or a decrease in the usage in field 3) of a first data object 108 that is identified in field 4 of a second data object 108 can be based on a percentage of an increase (or other charge) in the usage metric (e.g. field 2 or field 3) of the second data object. 108.

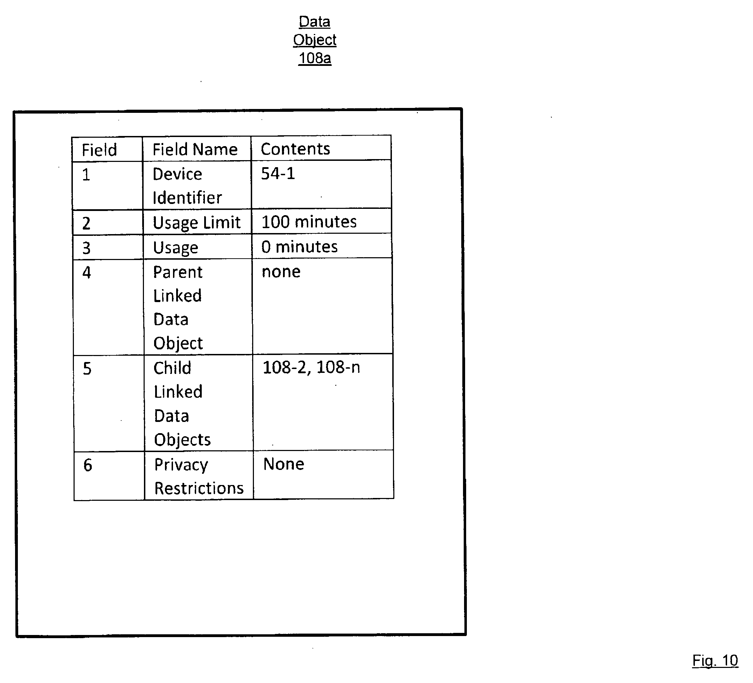

Referring now to Figure 10, an enhanced data object 108a is shown to illustrate at least one of the contemplated variations to the teachings herein. Enhanced data object 108a is based on enhanced data object 108 and includes the same first four fields as object 108, but also includes additional fields. Field 5 is labeled "Child Linked Data Objects" and includes the contents 108-2, 108-n to indicate that data object 108-2 and data object 108-n are linked to data object 108a-1 as per the examples given above. (Field 4 thus has the same meaning and contents as data object 108-1 above, but is labeled "Parent Linked Data Objects" to distinguish from Field 5). Field 6 is labeled "Privacy Restrictions", which have the contents in the example of Figure 10 as "None", but could be configured to be set to "Parent Linked Data Objects only", to indicate that for example, a message generated at block 340 could only be sent to parent linked data objects, but could not be sent to any other entity. Other types and settings for Privacy Restrictions will now occur to those of skill in the art. Other extensions and variations of data object 108 and data objects 108a will now occur to those skilled in the art.

As a still further variation involving data object 108a, it is contemplated that engine 82 could be configured to receive a request from a given device 54 querying as to the contents of the other data objects 108 that are identified as parent linked data objects in Field 4 or child linked data objects in Field 5. Whether or not a response to such a query is provided by engine 82 can be based on Privacy Restrictions identified in Field 8. In this manner, device 54-1 associated with data object 108a-1 could view the contents of, for example, field 2 or field 3 of data objects 108-2 and 108-n.

As a still further variation involving data object 108a, it is contemplated that engine 82 could be configured to receive a request from a given device 54 querying as to an identification of all devices that are associated with parent linked data objects in Field 4 or child linked data objects in Field 5. Again, whether or not a response to such a query is provided by engine 82 can be based on Privacy Restrictions identified in Field 8.

## Claims

1. A method (400) for updating data objects (108-1, 108-2, 108-n) associated with electronic devices (54-1, 54-2, 54-n) comprising:
storing a first data object (108-1), said first data object containing an identifier of a first electronic device (54-1) and a first usage metric for controlling access to a network (62) by said first electronic device;
receiving a message (310) from said first electronic device (54-1) via said network (62), said message (310) including an identifier of a second electronic device (54-2);
in response to receiving said message (310), provisioning (325) said second electronic device (54-2) for accessing said network (62) by creating a second data object (108-2) associated with said second electronic device (54-2), said second data object (108-2) containing an identifier of said second electronic device (54-2) and a second usage metric for controlling access to said network (62) by said second electronic device (54-2);
inserting (335), within said second data object (108-2), a reference to said first data object (108-1) associated with said first electronic device (54-1);
receiving instructions (405) to adjust said second usage metric of said second data object (108-2);
accessing said second data object (108-2);
performing an adjustment (410) to said second usage metric in said second data object (108-2) in accordance with said instructions (405);
determining (415), based on said adjustment (410) to said second usage metric, whether said first data object (108-1) should be adjusted;
when said determination is negative, making no adjustment to said first data object;
when said determination is affirmative:
accessing (425) said first data object (108-1) identified within said second data object (180-2); and
performing an other adjustment (430) to said first usage metric of said first data object (108-1); said other adjustment (430) based on said adjustment (410).

2. The method of claim 1 wherein said first usage metric associated with said first electronic device (54-1) and said second usage metric associated with said second electronic device (54-2) are usage limits.

3. The method of claim 2 wherein said other adjustment (430) is an increase to said usage limit associated with said first data object (180-1).

4. The method of claim 3 wherein said increase is based on a percentage of an increase to said usage limit associated with said adjustment (410).

5. The method of claim 1, wherein said first usage metric associated with said first electronic device (54-1) is a first actual usage and said second usage metric associated with said second electronic device (54-2) is a second actual usage.

6. The method of claim 5 wherein said other adjustment (430) is a decrease to said first actual usage.

7. The method of claim 6 wherein said decrease is based on a percentage of an increase to said actual usage associated with said adjustment (410).

8. The method of any one of claims 1-7 wherein said first usage metric and said second usage metric are each associated with a service available over said network (62) to said first electronic device (54-1) and said second electronic device (54-2).

9. The method of claim 8 wherein said service comprises at least one of voice services and data services comprising one or more of web browsing, emails, streaming audio or video media, SMS messages, multi-media message service messages, or chat service.

10. The method of any one of claims 1-9 wherein units for said first and second usage metrics are expressed in terms of one or more of minutes, seconds, currency, bytes, data sessions, data blocks, or the like.

11. The method of claim 10 wherein data blocks or data sessions comprise a song, a ring tone or movie.

12. The method of claim 1 wherein said first data object (108-1) is associated with said first electronic device (54-1) or said second data object (108-2) is associated with said second electronic device (54-2) by means of one of an absolute identifier and a relative identifier.

13. The method of claim 12 wherein said absolute identifier is a International Mobile Equipment Identity (IMEI).

14. The method of claim 12 wherein said relative identifier is at least one of an International Mobile Subscriber Identity (IMSI) and Mobile Systems International Subscriber Identity Number (MSISDN).

15. A data object management engine (82) for updating data objects (108-1, 108-2, 108-n) associated with electronic devices (54-1, 54-2, 54-n) comprising:
a memory (224, 228) storing a first data object (108-1), said first data object (108-1) containing an identifier of a first electronic device (54-1) and a first usage metric for controlling access to a network (62) by said first electronic device (54-1);
an interface (216) connected to said network (62); and
a processor connected to said memory (224, 228) and said interface (216), said processor configured to:
receive a message (310) via said interface (216) from said first electronic device (54-1), said message (310) including an identifier of a second electronic device (54-2);
in response to receiving said message (310), provision (325) said second electronic device (54-2) for accessing said network (62) by creating a second data object (108-2) associated with said second electronic device (54-2), said second data object (108-2) containing an identifier of said second electronic device (54-2) and a second usage metric for controlling access to said network (62) by said second electronic device (54-2);
insert (335), within said second data object (108-2), a reference to said first data object (108-1) associated with said first electronic device (54-1);
receive instructions (405) to adjust said second usage metric of said second data object (108-2);
access said second data object (108-2);
perform an adjustment (410) to said second usage metric in said second data object (108-2) in accordance with said instructions;
determine (415), based on said adjustment to said second usage metric, whether said first data object (108-1) should be adjusted;
when said determination is negative, make no adjustment to said first data object (108-1);
when said determination is affirmative:
access said first data object (108-1) identified within said second data object (108-2); and
perform an other adjustment (430) to said first usage metric of said first data object (108-1); said other adjustment (430) based on said adjustment (410).

## Patentansprüche

1. Verfahren (400) zum Aktualisieren von Datenobjekten (108-1, 108-2, 108-n), die elektronischen Vorrichtungen (54-1, 54-2, 54-n) zugeordnet sind, umfassend:
Speichern eines ersten Datenobjekts (108-1), wobei das erste Datenobjekt eine Identifikation einer ersten elektronischen Vorrichtung (54-1) und eine erste Nutzungsmetrik zum Steuern des Zugriffs auf ein Netz (62) mittels der ersten elektronischen Vorrichtung aufweist;
Empfangen einer Meldung (310) aus der ersten elektronischen Vorrichtung (54-1) über das Netz (62), wobei die Meldung (310) eine Identifikation einer zweiten elektronischen Vorrichtung (54-2) enthält;
als Reaktion auf das Empfangen der Meldung (310), Bereitstellen (325) der zweiten elektronischen Vorrichtung (54-2) zum Zugreifen auf das Netz (62) durch Erzeugen eines zweiten Datenobjekts (108-2), das der zweiten elektronischen Vorrichtung (54-2) zugeordnet ist, wobei das zweite Datenobjekt (108-2) eine Identifikation der zweiten elektronischen Vorrichtung (54-2) und eine zweite Nutzungsmetrik zum Steuern des Zugriffs auf das Netz (62) mittels der zweiten elektronischen Vorrichtung (54-2) aufweist;
in dem zweiten Datenobjekt (108-2), Einführen (335) einer Referenz auf das erste Datenobjekt (108-1), das der ersten elektronischen Vorrichtung (54-1) zugeordnet ist;
Empfangen von Instruktionen (405) zum Anpassen der zweiten Nutzungsmetrik des zweiten Datenobjekts (108-2);
Zugreifen auf das zweite Datenobjekt (108-2);
Durchführen einer Anpassung (410) an die zweite Nutzungsmetrik in dem zweiten Datenobjekt (108-2) entsprechend den Instruktionen (405);
basierend auf der Anpassung (410) an die zweite Nutzungsmetrik,
Prüfen (415), ob das erste Datenobjekt (108-1) angepasst werden sollte;
falls das Prüfergebnis negativ ist, kein Durchführen einer Anpassung auf das erste Datenobjekt;
falls das Prüfergebnis positiv ist:
Zugreifen (425) auf das in dem zweiten Datenobjekt (108-2) identifizierte erste Datenobjekt (108-1); und
Durchführen einer weiteren Anpassung (430) an die erste Nutzungsmetrik des ersten Datenobjekts (108-1); wobei die weitere Anpassung (430) auf der besagten Anpassung (410) basiert.

2. Verfahren nach Anspruch 1, bei dem die der ersten elektronischen Vorrichtung (54-1) zugeordnete erste Nutzungsmetrik und die der zweiten elektronischen Vorrichtung (54-2) zugeordnete zweite Nutzungsmetrik Nutzungs-Grenzwerte sind.

3. Verfahren nach Anspruch 2, bei dem die weitere Anpassung (430) eine Erhöhung auf den dem ersten Datenobjekt (108-1) zugeordneten Nutzungs-Grenzwert ist.

4. Verfahren nach Anspruch 3, bei dem die Erhöhung auf einem Prozentwert einer Erhöhung auf den der besagten Anpassung (410) zugehörigen Nutzungs-Grenzwert basiert.

5. Verfahren nach Anspruch 1, bei dem die der ersten elektronischen Vorrichtung (54-1) zugeordnete erste Nutzungsmetrik eine erste Ist-Nutzung und die der zweiten elektronischen Vorrichtung (54-2) zugeordnete zweite Nutzungsmetrik eine zweite Ist-Nutzung ist.

6. Verfahren nach Anspruch 5, bei dem die weitere Anpassung (430) eine Abnahme auf die erste Ist-Nutzung ist.

7. Verfahren nach Anspruch 6, bei dem die Abnahme auf einem Prozentwert einer Erhöhung auf die der besagten Anpassung (410) zugehörige Ist-Nutzung basiert.

8. Verfahren nach einem der Ansprüche 1-7, bei dem der ersten Nutzungsmetrik und der zweiten Nutzungsmetrik jeweils eine Dienstleistung zugeordnet ist, welcher der ersten elektronischen Vorrichtung (54-1) und der zweiten elektronischen Vorrichtung (54-2) über das Netz (62) zu Verfügung steht.

9. Verfahren nach Anspruch 8, bei dem die Dienstleistung mindestens Sprachdienste oder Datendienste aufweisen, die eine oder mehrere Dienste aus Web-Browsing, e-mails, Streaming Audio- oder Video-Medien, SMS-Messages, Multi-Media-Message-Service-Messages oder Chat-Services umfassen.

10. Verfahren nach einem der Ansprüche 1-9, bei dem Einheiten für die ersten und zweiten Nutzungsmetriken in Form einer oder mehrerer Minuten, Sekunden, Währungseinheiten, Bytes, Datensitzungen, Datenblöcke oder dgl. ausgedrückt werden.

11. Verfahren nach Anspruch 10, bei dem Datenblöcke oder Datensitzungen ein Musikstück, einen Klingelton oder einen Film umfassen.

12. Verfahren nach Anspruch 1, bei dem das erste Datenobjekt (108-1) zu der ersten elektronischen Vorrichtung (54-1) oder das zweite Datenobjekt (108-2) zu der zweiten elektronischen Vorrichtung (54-2) mittels einer absoluten Identifikation oder einer relativen Identifikation zugeordnet ist.

13. Verfahren nach Anspruch 12, bei dem die absolute Identifikation eine International Mobile Equipment Identity (IMEI) ist.

14. Verfahren nach Anspruch 12, bei dem die relative Identifikation mindestens eine International Mobile Subscriber Identity (IMSI) oder Mobile Systems International Subscriber Identity Number (MSISDN) ist.

15. Datenobjekt-Handhabungsmaschine (82) zum Aktualisieren von Datenobjekten (108-1, 108-2, 108-n), die elektronischen Vorrichtungen (54-1, 54-2, 54-n) zugeordnet sind, mit:
einem Speicher (224, 228) zum Speichern eines ersten Datenobjekts (108-1), wobei das erste Datenobjekt (108-1) eine Identifikation einer ersten elektronischen Vorrichtung (54-1) und eine erste Nutzungsmetrik zum Steuern des Zugriffs auf ein Netz (62) mittels der ersten elektronischen Vorrichtung (54-1) aufweist;
einem mit dem Netz (62) verbundenen Interface (216); und
einem mit dem Speicher (224, 228) und dem Interface (216) verbundenen Prozessor, wobei der Prozessor konfiguriert ist zum:
Empfangen einer Meldung (310) aus der ersten elektronischen Vorrichtung (54-1) über das Interface (216), wobei die Meldung (310) eine Identifikation einer zweiten elektronischen Vorrichtung (54-2) enthält;
als Reaktion auf das Empfangen der Meldung (310), Bereitstellen (325) der zweiten elektronischen Vorrichtung (54-2) zum Zugreifen auf das Netz (62) durch Erzeugen eines zweiten Datenobjekts (108-2), das der zweiten elektronischen Vorrichtung (54-2) zugeordnet ist, wobei das zweite Datenobjekt (108-2) eine Identifikation der zweiten elektronischen Vorrichtung (54-2) und eine zweite Nutzungsmetrik zum Steuern des Zugriffs auf das Netz (62) mittels der zweiten elektronischen Vorrichtung (54-2) aufweist;
in dem zweiten Datenobjekt (108-2), Einführen (335) einer Referenz auf das erste Datenobjekt (108-1), das der ersten elektronischen Vorrichtung (54-1) zugeordnet ist;
Empfangen von Instruktionen (405) zum Anpassen der zweiten Nutzungsmetrik des zweiten Datenobjekts (108-2);
Zugreifen auf das zweite Datenobjekt (108-2);
Durchführen einer Anpassung (410) an die zweite Nutzungsmetrik in dem zweiten Datenobjekt (108-2) entsprechend den Instruktionen;
basierend auf der Anpassung an die zweite Nutzungsmetrik, Prüfen (415), ob das erste Datenobjekt (108-1) angepasst werden sollte;
falls das Prüfergebnis negativ ist, kein Durchführen einer Anpassung auf das erste Datenobjekt (108-1);
falls das Prüfergebnis positiv ist:
Zugreifen auf das in dem zweiten Datenobjekt (108-2) identifizierte erste Datenobjekt (108-1); und
Durchführen einer weiteren Anpassung (430) an die erste Nutzungsmetrik des ersten Datenobjekts (108-1); wobei die weitere Anpassung (430) auf der besagten Anpassung (410) basiert.

## Revendications

1. Procédé (400) de mise à jour d'objets de données (108-1, 108-2, 108-n) associés à des dispositifs électroniques (54-1, 54-2, 54-n) comprenant les étapes ci-dessous:
stocker un premier objet de données (108-1), ledit premier objet de données contenant un identifiant d'un premier dispositif électronique (54-1) et une première métrique d'utilisation pour commander l'accès à un réseau (62) par ledit premier dispositif électronique ;
recevoir un message (310) en provenance dudit premier dispositif électronique (54-1) par l'intermédiaire dudit réseau (62), ledit message (310) incluant un identifiant d'un second dispositif électronique (54-2) ;
en réponse à la réception dudit message (310), provisionner (325) ledit second dispositif électronique (54-2) pour accéder audit réseau (62) en créant un second objet de données (108-2) associé audit second dispositif électronique (54-2), ledit second objet de données (108-2) contenant un identifiant dudit second dispositif électronique (54-2) et une seconde métrique d'utilisation pour commander l'accès audit réseau (62) par ledit second dispositif électronique (54-2) ;
insérer (335), dans ledit second objet de données (108-2), une référence audit premier objet de données (108-1) associé audit premier dispositif électronique (54-1) ;
recevoir des instructions (405) pour ajuster ladite seconde métrique d'utilisation dudit second objet de données (108-2) ;
accéder audit second objet de données (108-2) ;
mettre en oeuvre un ajustement (410) au niveau de ladite seconde métrique d'utilisation dans ledit second objet de données (108-2) selon lesdites instructions (405) ;
déterminer (415), sur la base dudit ajustement (410) de ladite seconde métrique d'utilisation, si ledit premier objet de données (108-1) doit être ajusté ;
lorsque ladite détermination est négative, ne pas apporter d'ajustement audit premier objet de données ;
lorsque ladite détermination est affirmative :
accéder (425) audit premier objet de données (108-1) identifié dans ledit second objet de données (180-2) ; et
mettre en oeuvre un autre ajustement (430) au niveau de ladite première métrique d'utilisation dudit premier objet de données (108-1) ; ledit autre ajustement (430) étant basé sur ledit ajustement (410).

2. Procédé selon la revendication 1, dans lequel ladite première métrique d'utilisation associée audit premier dispositif électronique (54-1) et ladite seconde métrique d'utilisation associée audit second dispositif électronique (54-2) correspondent à des limites d'utilisation.

3. Procédé selon la revendication 2, dans lequel ledit autre ajustement (430) est une augmentation de ladite limite d'utilisation associée audit premier objet de données (180-1).

4. Procédé selon la revendication 3, dans lequel ladite augmentation est basée sur un pourcentage d'une augmentation de ladite limite d'utilisation associée audit ajustement (410).

5. Procédé selon la revendication 1, dans lequel ladite première métrique d'utilisation associée audit premier dispositif électronique (54-1) correspond à une première utilisation effective, et ladite seconde métrique d'utilisation associée audit second dispositif électronique (54-2) correspond à une seconde utilisation effective.

6. Procédé selon la revendication 5, dans lequel ledit autre ajustement (430) correspond à une diminution de ladite première utilisation effective.

7. Procédé selon la revendication 6, dans lequel ladite diminution est basée sur un pourcentage d'une augmentation de ladite utilisation effective associée audit ajustement (410).

8. Procédé selon l'une quelconque des revendications 1 à 7, dans lequel ladite première métrique d'utilisation et ladite seconde métrique d'utilisation sont chacune associées à un service disponible, sur ledit réseau (62), pour ledit premier dispositif électronique (54-1) et ledit second dispositif électronique (54-2).

9. Procédé selon la revendication 8, dans lequel ledit service comprend au moins l'un parmi des services vocaux et des services de données comprenant un ou plusieurs des éléments parmi une navigation web, des courriels, des médias audio ou vidéo de diffusion en continu, des messages SMS, des messages de service de messagerie multimédia, ou un service de clavardage.

10. Procédé selon l'une quelconque des revendications 1 à 9, dans lequel des unités pour lesdites première et seconde métriques d'utilisation sont exprimées en termes d'un ou plusieurs des éléments parmi des minutes, des secondes, une unité monétaire, des octets, des sessions de données, des blocs de données, ou des éléments similaires.

11. Procédé selon la revendication 10, dans lequel des blocs de données ou des sessions de données comprennent une chanson, une sonnerie ou un film.

12. Procédé selon la revendication 1, dans lequel ledit premier objet de données (108-1) est associé audit premier dispositif électronique (54-1) ou ledit second objet de données (108-2) est associé audit second dispositif électronique (54-2) au moyen d'un identifiant absolu et d'un identifiant relatif.

13. Procédé selon la revendication 12, dans lequel ledit identifiant absolu correspond à une identité internationale d'équipement mobile (IMEI).

14. Procédé selon la revendication 12, dans lequel ledit identifiant relatif correspond à au moins l'un des éléments parmi une identité internationale de l'abonné mobile (IMSI) et un numéro de réseau numérique à intégration de services de station mobile (MSISDN).

15. Moteur de gestion d'objets de données (82) pour mettre à jour des objets de données (108-1, 108-2, 108-n) associés à des dispositifs électroniques (54-1, 54-2, 54-n) comprenant :
une mémoire (224, 228) stockant un premier objet de données (108-1), ledit premier objet de données (108-1) contenant un identifiant d'un premier dispositif électronique (54-1) et une première métrique d'utilisation pour commander l'accès à un réseau (62) par ledit premier dispositif électronique (54-1) ;
une interface (216) connectée audit réseau (62) ; et
un processeur connecté à ladite mémoire (224, 228) et à ladite interface (216), ledit processeur étant configuré de manière à :
recevoir un message (310), par l'intermédiaire de ladite interface (216), en provenance dudit premier dispositif électronique (54-1), ledit message (310) incluant un identifiant d'un second dispositif électronique (54-2) ;
en réponse à la réception dudit message (310), provisionner (325) ledit second dispositif électronique (54-2) pour accéder audit réseau (62) en créant un second objet de données (108-2) associé audit second dispositif électronique (54-2), ledit second objet de données (108-2) contenant un identifiant dudit second dispositif électronique (54-2) et une seconde métrique d'utilisation pour commander l'accès audit réseau (62) par ledit second dispositif électronique (54-2) ;
insérer (335), dans ledit second objet de données (108-2), une référence audit premier objet de données (108-1) associé audit premier dispositif électronique (54-1) ;
recevoir des instructions (405) pour ajuster ladite seconde métrique d'utilisation dudit second objet de données (108-2) ;
accéder audit second objet de données (108-2) ;
mettre en oeuvre un ajustement (410) au niveau de ladite seconde métrique d'utilisation dans ledit second objet de données (108-2) selon lesdites instructions ;
déterminer (415), sur la base dudit ajustement de ladite seconde métrique d'utilisation, si ledit premier objet de données (108-1) doit être ajusté ;
lorsque ladite détermination est négative, ne pas apporter d'ajustement audit premier objet de données (108-1) ;
lorsque ladite détermination est affirmative :
accéder audit premier objet de données (108-1) identifié dans ledit second objet de données (180-2) ; et
mettre en oeuvre un autre ajustement (430) au niveau de ladite première métrique d'utilisation dudit premier objet de données (108-1) ; ledit autre ajustement (430) étant basé sur ledit ajustement (410).
